# EUROPEAN PATENT SPECIFICATION

(11) **EP 3 036 994 B1**
(45) Date of publication and mention of the grant of the patent: **14.11.2018**
(21) Application number: 15193770.3
(22) Date of filing: 28.09.2006
(51) Int. Cl.: A01N 43/50, A01N 57/12, A01P 3/00

(54) **SYNERGISTIC IMAZALIL COMBINATIONS**
SYNERGISTISCHE IMAZALIL-KOMBINATIONEN
COMBINAISONS D'IMAZALIL SYNERGIQUE

(30) Priority: 29.09.2005 EP 05108993
(43) Date of publication of application: 29.06.2016
(62) Divisional of application: 06793890.2
(73) Proprietor: Janssen Pharmaceutica NV, 2340 Beerse (BE)
(72) Inventor: GARNIER, Alain Joseph Jean Florimond, 2340 Beerse (BE); BYLEMANS, Dany Leopold Jozefien, 2340 Beerse (BE); BOSSELAERS, Jan Pieter Hendrik, 2340 Beerse (BE)
(74) Representative: Verberckmoes, Filip Gerard

(56) References cited:
- EP-A- 0 336 489
- WO-A-99/12422
- US-B1- 6 797 301

## Description

The present invention relates to synergistic combinations of the antifungal agent imazalil and the antifungal agent fosetyl-Al for protecting plants, fruit or seeds against phytopathogenic fungi. Compositions comprising this combination are useful for the protection of any living or non-living material, such as crops, plants, fruits, seeds, objects made of wood, thatch or the like, engineering material, biodegradable material and textiles against deterioration due to the action of microorganisms.

Fungicidal combinations comprising the antifungal agents imazalil, pyrimethanil or thiabendazole have been disclosed in, e.g. EP-0,336,489 which describes combinations of imazalil and propiconazole, WO-99/12422 which describes combinations of imazalil and epoxiconazole and WO-03/011030 which describes fungicidal compositions comprising pyrimethanil and imazalil. US-6,797,301 discloses fungicidal compositions of imazalil, fenamidone and fosetyl-Al for the curative or preventive treatment of fruits.

It has now been found that the combination consisting of imazalil (hereinafter referred to as component I) and the antifungal agent fosetyl-Al (hereinafter referred to as a component II), has a synergistic effect on the control of phytopathogenic fungi, *i.e.* a synergistic controlling or protecting effect against fungal growth on plants, fruit or seeds.

Imazalil, component (I), is a systemic fungicide with protective and curative action and is used to control a wide range of fungi on fruit, vegetables, and ornamentals, including powdery mildew on cucumber and black spot on roses. Imazalil is also used as a seed dressing and for post harvest treatment of citrus, banana, and other fruit to control storage decay. It is the generic name of the compound 1-[2-(2,4-dichlorophenyl)-2-(2-propenyloxy)ethyl)]-1*H*-imidazole, which compound may be represented by the formula

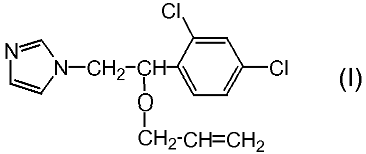

The component (II) is fosetyl-Al, component (II-g), which is the generic name for aluminum tris(ethyl phosphite).

The antifungal agents imazalil (I), and fosetyl-Al (II-g) may be present in their free base form or in the form of an acid addition salt, the latter being obtained by reaction of the base form with an appropriate acid. Appropriate acids comprise, for example, inorganic acids, such as the hydrohalic acids, *i.e.* hydrofluoric, hydrochloric, hydrobromic and hydroiodic, sulfuric acid, nitric acid, phosphoric acid, phosphinic acid and the like; or organic acids, such as, for example, acetic, propanoic, hydroxyacetic, 2-hydroxypropanoic, 2-oxopropanoic, ethanedioic, propanedioic, butanedioic, (Z)-2-butenedioic, (E)-2-butenedioic, 2-hydroxybutanedioic, 2,3-dihydroxy-butanedioic, 2-hydroxy-1,2,3-propane-tricarboxylic, methanesulfonic, ethane-sulfonic, benzenesulfonic, 4-methyl-benzenesulfonic, cyclohexanesulfamic, 2-hydroxybenzoic, 4-amino-2-hydroxy-benzoic and the like acids.

Particular salt forms of imazalil (I) are the sulfate, phosphate, acetate, nitrate or phosphite salts.

The components (I) and (II) for use in the compositions according to the present invention should preferably be present in a substantially pure form, *i.e.* free from chemical impurities (such as co-products or residual solvents) resulting from their manufacturing and/or handling processes in view to safely control the phytopathogenic fungi management programs for which they are intended. The term "substantially pure" as used hereinbefore means a purity (either chemical or optical), as determined by methods conventional in the art such as high performance liquid chromatography or optical methods, of at least about 96%, preferably at least 98% and more preferably at least 99%.

Imazalil (I) has one asymmetric carbon atom and can therefore be used in the embodied compositions in the form of a mixture of both enantiomers, in particular a racemic mixture, or in the form of a substantially pure (R)- or (S)-enantiomer. The term "substantially pure" as used hereinbefore means a purity (either chemical or optical), as determined by methods conventional in the art such as high performance liquid chromatography or optical methods, of at least about 96%, preferably at least 98% and more preferably at least 99%.

The compositions of the present invention are active against a broad range of phytophatogenic fungi. As examples of such fungi there may be named Ascomycetes (e.g. *Venturia*, *Podosphaera*, *Erysiphe, Monilinia, Uncinula, Aureobasidium, Sclerophoma);* Basidiomycetes (e.g. *Hemileia, Rhizoctonia, Puccinia, Coniophora, Serpula, Poria, Uromyces, Gloeophyllum, Lentinus, Coriolus, Irpex*); Fungi imperfecti (e.g. *Botrytis, Helminthosporium, Rhynchosporium, Fusarium, Septoria, Cercospora, Alternaria, Pyricularia, Penicillium, Geotrichum*)*.*

The relative proportions of component (I) and component (II) in the embodied compositions are those proportions which result in unexpected synergistic efficacy against fungi, especially against plant, fruit and seed pathogens, when compared to a composition including, as an active ingredient, either component (I) alone or one of the components (II) alone. As will readily be understood by those skilled in the art, the said synergistic efficacy may be obtained within various proportions of components (I) and (II) in the composition, depending on the kind of fungi towards which efficacy is measured and the substrate to be treated. Based on the teachings of the present application, determination of the synergistic or possibly (for some proportions of components (I) and (II) applied to specific fungi) non-synergistic efficacy of such compositions is well within the routine work of those skilled in the art. As a general rule, however, it may be said that for most phytopathogenic fungi the suitable proportions by weight of the amount of component (I) to component (II) in the active composition should lie in the range from 10:1 to 1:10, more preferably from 4:1 to 1:4.

The quantity of each of the active ingredients in the compositions according to the present invention will be so that a synergistic fungicidal effect is obtained. In particular it is contemplated that the ready to use compositions of the present invention comprise component (I) in a range from 10 to 50.000 mg/l. The component (II) is present in an amount ranging from 10 to 50.000 mg/l depending upon the specific activity of the selected component (II).

The concentration of component (I) and component (II) in the ready to use compositions is also dependent upon the specific conditions wherein these compositions are used. For instance, in foliar treatment a solution is sprayed directly onto the leaves wherein the concentration of component (I) ranges from 100 mg to 250 mg/l. Potatoes are treated with a composition comprising component (I) in an amount of about 7500 mg/l in such a manner that a solution of 2 litres is used for treating 1.000 kg. In the treatment of seed the compositions used comprise component (I) in an amount of about 50 g/l in such a manner that 100 kg of seed is treated with a solution of 100 ml to 200 ml. In the post-harvest treatment of fruit compositions are used comprising component (I) in an amount ranging from 250 to 500 mg/l in dip treatment, from 500 to 1.000 mg/l in spray treatment, and from 1.000 to 2.000 mg/l in wax treatment.

The compositions of the present invention consist of a component (I), imazalil, and an antifungal component (II), fosetyl-Al, in respective proportions to provide a synergistic antifungal effect, a carrier and optionally an adjuvant. This carrier is any material or substance with which the composition of components (I) and (II) is formulated in order to facilitate its application/dissemination to the locus to be treated, for instance by dissolving, dispersing, or diffusing the said composition, and/or to facilitate its storage, transport or handling without impairing its antifungal effectiveness. Said acceptable carrier may be a solid or a liquid or a gas which has been compressed to form a liquid, *i.e.* the compositions of this invention can suitably be used as concentrates, emulsions, emulsifiable concentrates, oil miscible suspension concentrates, oil-miscible liquid, soluble concentrates, solutions, granulates, dusts, sprays, aerosols, pellets, or powders.

In many instances the fungicidal compositions to be used directly can be obtained from concentrates, such as e.g. emulsifiable concentrates, suspension concentrates, or soluble concentrates, upon dilution with aqueous or organic media, such concentrates being intended to be covered by the term composition as used in the definitions of the present invention. Such concentrates can be diluted to a ready to use mixture in a spray tank shortly before use. Preferably the compositions of the invention should contain from about 0.01 to 95% by weight of the combination of components (I) and (II). More preferably this range is from 0.1 to 90% by weight. Most preferably this range is from 1 to 80% by weight, depending on the type of formulation to be selected for specific application purposes, as further explained in details hereinafter.

An emulsifiable concentrate is a liquid, homogeneous formulation of the components (I) and (II) to be applied as an emulsion after dilution in water. A suspension concentrate is a stable suspension of the active ingredients in a fluid intended for dilution with water before use. A soluble concentrate is a liquid, homogeneous formulation to be applied as a true solution of the active ingredients after dilution in water.

The fungicidal compositions of the present invention can also be formulated as waxes for use as a cover or coating of e.g. fruit, in particular citrus fruit.

The fungicidal compositions according to the present invention possess advantageous curative, preventive and antisporulant fungicidal activity to protect plants, fruit and seeds. The present mixtures can be used to protect plants or parts of plants, e.g. fruit, blossoms, flowers, foliage, stems, roots, cuttings, tubers of plants or culture plants infected, harmed or destroyed by micro-organisms, whereby later-growing parts of plants are protected against such micro-organisms.

As examples of the wide variety of culture plants in which the combinations of components (I) and (II) according to the present invention can be used, there may be named for example cereals, e.g. wheat, barley, rye, oats, rice, sorghum and the like; beets, e.g. sugar beet and fodder beet; pome and stone fruit and berries, e.g. apples, pears, plums, peaches, almonds, cherries, strawberries, raspberries and blackberries; leguminous plants, e.g. beans, lentils, peas, soy beans; oleaginous plants, e.g. rape, mustard, poppy, olive, sunflower, coconut, castor-oil plant, cocoa, ground-nuts; cucurbitaceae, e.g. pumpkins, gherkins, melons, cucumbers, squashes; fibrous plants, e.g. cotton, flax, hemp, jute; citrus fruit, e.g. orange, lemon, grapefruit, mandarin; vegetables, e.g. spinach, lettuce, asparagus, brassicaceae such as cabbages and turnips, carrots, onions, tomatoes, potatoes, hot and sweet peppers; laurel-like plants, e.g. avocado, cinnamon, camphor tree; or plants such as maize, tobacco, nuts, coffee, sugar-cane, tea, vines, hops, bananas, rubber plants, as well as ornamental plants, e.g. flowers, shrubs, deciduous trees and evergreen trees such as conifers. This enumeration of culture plants is given with the purpose of illustrating the invention and not to delimiting it thereto.

A particular mode of administering an antifungal composition of the present invention, is the administration to the aboveground parts of plants, in particular to the leaves thereof (leaf-application). The number of applications and the administered doses are chosen in accordance with the biological and climatic conditions of life of the causative agent. The antifungal compositions though, can also be applied to the soil and get into the plants through the root system (systemic activity), in case the locus of the plants is sprayed with a liquid composition or if the components are added to the soil in a solid formulation e.g. in the form of a granulate (soil application).

The antifungal compositions of the present invention are particularly useful in post-harvest treatment of fruit, especially citrus fruit. In the latter instance, the fruit will be sprayed with or dipped or drenched into a liquid formulation or the fruit may be coated with a waxy composition. The latter waxy composition conveniently is prepared by thoroughly mixing a suspension concentrate with a suitable wax. The formulations for spray, dip or drench applications may be prepared upon dilution of a concentrate such as, e.g. an emulsifiable concentrate, a suspension concentrate or a soluble liquid, with an aqueous medium. Such concentrate in most instances consists of the active ingredients, a dispersing or suspending agent (surfactant), a thickening agent, a small amount of organic solvent, a wetting agent, optionally some anti-freeze agent, and water.

The fungicidal compositions of the present invention can also be used for protecting seed against fungi. To that effect the present fungicidal compositions can be coated on seed, in which case the seed grains are drenched consecutively with a liquid composition of the active ingredients or if they are coated with a previously combined composition. The compositions can also be sprayed or atomised onto the seed using e.g. a spinning disc atomiser.

The combination of components (I) and (II) is applied in the form of compositions wherein both said components are intimately admixed in order to ensure simultaneous administration to the materials to be protected.

Appropriate carriers and adjuvants for use in the compositions of the present invention may be solid or liquid and correspond to suitable substances known in the art of formulation, such as, for example natural or regenerated mineral substances, solvents, dispersants, surfactants, wetting agents, adhesives, thickeners, binders, fertilizers or anti-freeze agents.

The components (I) and (II) are used in unmodified form or, preferably, together with the adjuvants conventionally employed in the art of formulation. They are therefore formulated following art-known procedures to emulsifiable concentrates, directly sprayable or dilutable solutions, dilute emulsions, wettable powders, soluble powders, dusts, granulates, and also encapsulations in e.g. polymer substances. As with the nature of the compositions, the methods of application, such as spraying, atomizing, dusting, scattering or pouring, are chosen in accordance with the intended objectives and the prevailing circumstances.

The formulations, *i.e.* the compositions, preparations or mixtures comprising the active ingredients and, where appropriate, a solid or liquid adjuvant, are prepared in known manner, e.g. by homogeneously mixing and/or grinding the active ingredients with extenders, e.g. solvents, solid carriers and, where appropriate, surface-active compounds (surfactants).

Suitable solvents are aromatic hydrocarbons, preferably the fractions containing 8 to 12 carbon atoms, e.g. dimethylbenzene mixtures or substituted naphthalenes, phthalates such as dibutyl phthalate or dioctyl phthalate, aliphatic or alicyclic hydrocarbons such as cyclohexane or paraffins, alcohols and glycols and their ethers and esters, such as ethanol, ethylene glycol, ethylene glycol monomethyl or monoethyl ether, ketones such as cyclohexanone, strongly polar solvents such as N-methyl-2-pyrrolidone, dimethylsulfoxide or dimethylformamide, as well as vegetable oils or epoxidised vegetable oils such as epoxidised coconut oil or soybean oil; or water.

The solid carriers used e.g. for dusts and dispersible powders are normally natural mineral fillers such as calcite, talcum, kaolin, montmorillonite or attapulgite. In order to improve the physical properties it is also possible to add highly dispersed silicic acid or highly dispersed absorbent polymers. Suitable granulated absorbent carriers are of the porous type, for example pumice, broken brick, sepiolite or bentonite; and suitable nonsorbent carriers are materials such as calcite or sand. In addition, a great number of pregranulated materials of inorganic or organic nature can be used, e.g. especially dolomite or pulverised plant residues.

Suitable surface-active compounds to be used in the compositions of the present invention are non-ionic, cationic and/or anionic surfactants having good emulsifying, dispersing and wetting properties. The term "surfactants" will also be understood as comprising mixtures of surfactants.

Appropriate carriers and adjuvants for use in the compositions of the present invention may be solid or liquid and correspond to suitable substances known in the art for preparing formulations for treating plants or their loci, or for treating plant products, in particular for treating wood, such as, for example, natural or regenerated mineral substances, solvents, dispersants, surfactants, wetting agents, adhesives, thickeners, binders, fertilizers, anti-freeze agents, repellents, colour additives, corrosion inhibitors, water-repelling agents, siccatives, UV-stabilizers and other active ingredients.

Suitable anionic surfactants can be both water-soluble soaps and water-soluble synthetic surface-active compounds.

Suitable soaps are the alkali metal salts, earth alkaline metal salts or unsubstituted or substituted ammonium salts of higher fatty acids (C₁₀-C₂₂), e.g. the sodium or potassium salts of oleic or stearic acid, or of natural fatty acid mixtures which can be obtained e.g. from coconut oil or tallow oil. In addition, there may also be mentioned fatty acid methyltaurin salts.

More frequently, however, so-called synthetic surfactants are used, especially fatty sulfonates, fatty sulfates, sulfonated benzimidazole derivatives or alkylarylsulfonates. The fatty sulfonates or sulfates are usually in the form of alkali metal salts, earth alkaline metal salts or unsubstituted or substituted ammonium salts and contain an alkyl radical having from 8 to 22 carbon atoms said alkyl also comprising radicals derived from acyl radicals, e.g. the sodium or calcium salt of lignosulfonic acid, of dodecylsulfate or of a mixture of fatty alcohol sulfates obtained from natural fatty acids. These compounds also comprise the salts of sulfuric acid esters and sulfonic acids of fatty alcohol/ethylene oxide adducts. The sulfonated benzimidazole derivatives preferably contain 2 sulfonic acid groups and one fatty acid radical containing 8 to 22 carbon atoms. Examples of alkylarylsulfonates are the sodium, calcium or triethanolamine salts of dodecylbenzene sulfonic acid, dibutylnaphthalene-sulfonic acid, or of a naphthalene-sulfonic acid/formaldehyde condensation product. Also suitable are corresponding phosphates, e.g. salts of the phosphoric acid ester of an adduct of p-nonylphenol with 4 to 14 moles of ethylene oxide, or phospholipids.

Non-ionic surfactants are preferably polyglycol ether derivatives of aliphatic or cycloaliphatic alcohols, or saturated or unsaturated fatty acids and alkylphenols, said derivatives containing 3 to 10 glycol ether groups and 8 to 20 carbon atoms in the (aliphatic) hydrocarbon moiety and 6 to 18 carbon atoms in the alkyl moiety of the alkylphenols.

Further suitable non-ionic surfactants are the water-soluble adducts of polyethylene oxide with polypropylene glycol, ethylenediaminopoly- propylene glycol containing 1 to 10 carbon atoms in the alkyl chain, which adducts contain 20 to 250 ethylene glycol ether groups and 10 to 100 propylene glycol ether groups. These compounds usually contain 1 to 5 ethylene glycol units per propylene glycol unit.

Representative examples of non-ionic surfactants are nonylpheno-lpolyethoxy ethanols, castor oil polyglycol ethers, polypropylene/polyethylene oxide adducts, tributylphenoxypolyethoxyethanol, polyethylene glycol and octylphenoxypolyethoxy-ethanol. Fatty acid esters of polyethylene sorbitan, such as polyoxyethylene sorbitan trioleate, are also suitable non-ionic surfactants.

Particularly advantageous additives useful to improve the application and reduce the dose of the active ingredients, are the natural (animal or plant) or synthetic phospholipids of the cephalin or lecithin type such as, for example, phosphatidylethanolamine, phosphatidylserine, phosphatidylglycerine, lysolecithin, or cardiolipin. Such phospholipids may be obtained from animal or plant cells, in particular from brain-, heart- or liver tissue, egg yolks or soy beans. Appropriate such phospholipids are for instance, phosphatidylchlorin mixtures. Synthetic phospholipids are for instance, dioctanylphosphatidyl-chloline and dipalmitoylphosphatidylcholine.

### Experimental part

### Experiment 2 : poison plate assay

### Name of the primary compound : - imazalil (I)

Formulations: (% is in w/v)

| Compound | | Conc. |
|---|---|---|
| imazalil | (I) | 75 g/l |
| fosetyl-Al | (II-g) | 80,0% |

| | |
|---|---|
| Stock solution: | 2000 ppm (w/w) |
| Solvent for dilutions: | demineralised water |
| Fungal species : | post harvest and seed pathogens : *Geotrichum candidum* (Gca) and *Penicillium digitatum* (Pdi) |

Calculated amounts of dilutions were poured into multi-well plates. Culture medium was added aseptically and uniform distribution was obtained by shaking. The plates were inoculated with the test fungi and incubated during a period long enough to allow complete outgrowth of controls.

| | |
|---|---|
| Test concentrations: | noted in ppm versus growth medium (w/v): see tables |
| Replicates: | 4 |
| Culture medium: | PDA (Potato Dextrose Agar) |
| Culture conditions: | 22°C and 60% relative humidity |
| Inoculation: | with a small piece of agar from the margin of an actively growing culture or a suspension of spores, mycelium or culture |
| Evaluation date: | at complete outgrowth of control |
| Synergy calculation: | Diameter of fungal growth (in mm) was measured, mean radial growth (X) and measured activity (M) were calculated. The expected activity E of a combination of active ingredients was calculated by using Limpel's formula (Richter, D.L; Pesticide Science 1987, 19: 309-315): |
| | E = A + B - (A*B)/100 wherein A and B express the activities obtained for each of the active ingredients when applied alone. A synergistic effect is acknowledged if the measured activity M exceeds the calculated (expected) activity E (synergy indicated by figures in bold). |

**Table 6 : Experiment 3: Activity of imazalil (I) and fosetyl-Al (II-g) and their combinations against post harvest and seed pathogens. X= mean fungal growth; E= expected activity; M= measured activity**

| | *Pdi* | | | |
|---|---|---|---|---|
| | Conc | | | |
| | ppm | X | E | M |
| control | 0 | 15 | - | 0 |
| imazalil (I) | 0,02 | 2 | - | 88 |
| | | | | |
| | | | | |
| fosetyl-AI (II-g) | 0 | 15 | - | 0 |
| (I) + (II-g) | 0.02+0.02 | 1 | 88 | 93 |

## Claims

1. A composition consisting of a component (I), imazalil, and an antifungal component (II-g), fosetyl-Al, in respective proportions to provide a synergistic antifungal effect, a carrier and optionally an adjuvant.

2. A composition according to claim 1 wherein the ratio by weight of component (I) to component (II-g) ranges from 10:1 to 1:10.

3. A composition according to any of claims 1 to 2 wherein the amount of component (I) is present in a range from 10 to 50.000 mg/l and the amount of component (II-g) is present in a range from 10 to 50.000 mg/l.

4. Use of a composition as defined in any of claims 1 to 3 for protecting plants or their loci, fruit, or seed against fungi.

5. A use as claimed in claim 4 wherein the use is post-harvest treatment of fruit.

6. A process for preparing a synergistic composition as claimed in any of claims 1 to 3, **characterized in that** the component (I) and one of the components (II) are intimately mixed with the carrier.

## Patentansprüche

1. Zusammensetzung, die aus einer Komponente (I), Imazalil und einer antifungalen Komponente (II-g), Fosetyl-Al, in entsprechenden Anteilen, um eine synergistische antifungale Wirkung auszuüben, einem Träger und gegebenfalls einem Zusatzstoff besteht.

2. Zusammensetzung nach Anspruch 1, wobei das Gewichtsverhältnis von Komponente (I) zu Komponente (II-g) im Bereich von 10:1 bis 1:10 liegt.

3. Zusammensetzung nach einem der Ansprüche 1 bis 2, wobei die Menge an Komponente (I) im Bereich von 10 bis 50 000 mg/l vorliegt und die Menge an Komponente (II-g) im Bereich von 10 bis 50 000 mg/l vorliegt.

4. Verwendung einer wie in einem der Ansprüche 1 bis 3 definierten Zusammensetzung zum Schützen von Pflanzen oder ihrer Standorte, Früchte oder Samen gegen Pilze.

5. Verwendung nach Anspruch 4, wobei es sich bei der Verwendung um die Post-Harvest-Behandlung von Früchten handelt.

6. Verfahren zur Herstellung einer synergistischen Zusammensetzung nach einem der Ansprüche 1 bis 3, **dadurch gekennzeichnet, dass** man die Komponente (I) und eine der Komponenten (II) innig mit dem Träger vermischt.

## Revendications

1. Composition constituée d'un composant (I), l'imazalil, et d'un composant antifongique (II-g), le fosetyl-Al, dans des proportions respectives afin de fournir un effet antifongique synergique, d'un véhicule et éventuellement d'un adjuvant.

2. Composition selon la revendication 1, **caractérisée en ce que** le rapport pondéral du composant (I) au composant (II-g) va de 10:1 à 1:10.

3. Composition selon l'une quelconque des revendications 1 à 2, **caractérisée en ce que** la quantité de composant (I) se trouve dans une plage allant de 10 à 50, 000 mg/l et la quantité de composant (II-g) se trouve dans une plage allant de 10 à 50,000 mg/l.

4. Utilisation d'une composition telle que définie selon l'une quelconque des revendications 1 à 3, pour la protection de plantes ou de leur lieu de développement, de fruits, ou de semences, contre des champignons.

5. Utilisation selon la revendication 4, **caractérisée en ce que** l'utilisation est un traitement post-récolte de fruits.

6. Procédé de préparation d'une composition synergique selon l'une quelconque des revendications 1 à 3, **caractérisé en ce que** le composant (I) et l'un des composants (II) sont mélangés de manière intime avec le véhicule.
